# EUROPÄISCHE PATENTSCHRIFT

(11) **EP 1 997 751 B1**
(45) Veröffentlichungstag und Bekanntmachung des Hinweises auf die Patenterteilung: **14.10.2009**
(21) Anmeldenummer: 08156233.2
(22) Anmeldetag: 15.05.2008
(51) Int. Cl.: B65G 1/04, B65G 1/137

(54) **Verfahren zum Betrieb eines Kommissioniersystems**
Method for operating a picking system
Procédé destiné au fonctionnement d'un système de commissionnement

(30) Priorität: 31.05.2007 DE 102007025488
(43) Veröffentlichungstag der Anmeldung: 03.12.2008
(73) Patentinhaber: Dematic GmbH, 63073 Offenbach am Main (DE)
(72) Erfinder: Jungbluth, Volker, 64850 Schaafheim (DE); Stehr, Peter, 63179 Obertshausen (DE)
(74) Vertreter: Moser, Jörg Michael

(56) Entgegenhaltungen:
- DE-A1- 3 610 347
- DE-A1- 10 013 092
- DE-A1- 19 857 282

## Beschreibung

Die Erfindung betrifft ein Verfahren zum Betrieb eines Kommissioniersystems und ein entsprechendes Kommissioniersystem mit einem Lager, in welchem Artikel an Lagerorten gelagert sind und mit einem Roboter, welcher mittels mindestens eines Lastaufnahmemittels Artikel während eines Verlagerungsvorgangs von dem Lagerort an einen Bereitstellungsort oder in umgekehrter Richtung selbsttätig bewegt.

Aus der DE 36 10 347 A1 ist es bekannt, ein Regalbediengerät mit einer Videokamera zu versehen, deren Bilder einem Bediener die komplette Fernsteuerung des Regalbediengeräts während des Handhabens und Transportierens der Waren erlauben.

Aus der DE 103 25 961 A1 ist ein Verfahren zur computergeschützten Ausgabe eines Arzneimittels an einen Benutzer bekannt, wobei a) der Benutzer über eine mit einem Computer verbundene Eingabeeinrichtung, die sich am Ort eines automatisierten Apothekenlagers befindet, eine Eingabe vornimmt, die anzeigt, dass der Benutzer ein Arzneimittel anfordern möchte, b) nach Erfassen der Eingabe über einen Datenfernübertragungskanal ein Rufsignal an eine entfernt angeordnete Datenkommunikationseinrichtung, die von einem Apotheker bedient werden kann, übermittelt wird, c) mit Hilfe der entfernt angeordneten Datenkommunikationseinrichtung über den Datenfernübertragungskanal ein Dialog mit dem Benutzer mit Hilfe einer mit dem Computer gekoppelten Datenausgabeeinrichtung initiiert wird, in welchem der Benutzer aufgefordert wird, über die Eingabeeinrichtung eine Eingabe zum Spezifizieren eines gewünschten Arzneimittels vorzunehmen sowie wenigstens eine weitere Eingabe zur Beantwortung wenigstens einer Freigabeanfrage vorzunehmen, d) vom Benutzer die Eingabe zur Spezifizierung des Arzneimittels und die Eingabe zur Beantwortung der Freigabeanfrage vorgenommen wird, e) die Spezifikation des gewünschten Arzneimittels und die wenigstens eine Antwort auf die wenigstens eine Freigabeanfrage verarbeitet und über den Datenfernübertragungskanal an die entfernt angeordnete Datenkommunikationseinrichtung übermittelt werden, f) die entfernt angeordnete Datenkommunikationseinrichtung eine Aufforderung für eine Freigabebestätigung erzeugt, und g) die Freigabebestätigung erzeugt und eine entsprechendes Signal über den Datenfernübertragungskanal an den Computer übermittelt wird, woraufhin der Computer das automatisierte Apothekenlager veranlasst, das gewünschte Arzneimittel auszulagern und über eine automatische Ausgabeeinrichtung zu einer für den Benutzer zugänglichen Entnahmestelle zu transportieren.

Aus der DE 198 56 762 A1 ist eine elektronische Archivierungsvorrichtung für in einen Raum abgelegte Gegenstände bekannt, wobei jedem Gegenstand eine elektronische Identifikationseinrichtung zugeordnet ist und Kommunikationsmittel zum Wiederauffinden der Gegenstände vorgesehen sind. Den Kommunikationsmitteln ist eine den aufgefundenen Gegenständen anzeigende, auf den Gegenstand richtbare Markierungseinrichtung zugeordnet. Des Weiteren ist eine von den Kommunikationsmitteln ansteuerbare Einrichtung zur Ausrichtung der Markierungseinrichtung auf die dem Gegenstand zugeordneten elektronischen Identifikationseinrichtung vorgesehen.

Die automatische Kommissionierung von Gütern unterliegt gegenwärtig einer rasanten Entwicklung, da beispielsweise Internet-Kaufhäuser eine personalarme Umsetzung von Artikeln ermöglichen, welche nicht tatsächlich physikalisch präsentiert werden, sondern lediglich einer Lagerung bedürfen. Um Personal einzusparen bedienen sich heutzutage schon automatische Kommissioniersysteme eines Roboters, der unter anderem eine Sensorik zum Erkennen der Produktlage an der Entnahmestelle aufweist und zum Bewegen des Artikels mit einem flexiblen Lastaufnahmesystem versehen ist.

Vor besondere Probleme sieht sich die Entwicklung des Lastaufnahmemittels und insbesondere der Steuerung desselben gestellt, da die Artikel von unterschiedlichster Beschaffenheit sind. Die verschiedenen Formen, Gewichte und Stabilitäten der Artikel erfordern eine äußerst intelligente Erkennung dieser Eigenschaften und eine ebenso hoch entwickelte Ansteuerung des Lastaufnahmemittels. Die bisherigen Ansteuerkonzepte für beispielsweise greifende Lastaufnahmemittel sind auch auf absehbare Zeit der Intelligenz einer Ansteuerung durch den Menschen weit unterlegen. Aus diesem Grund finden automatisierte Kommissioniersysteme nur für eine verhältnismäßig eng begrenzte Auswahl von Artikeln Einsatz.

Zurzeit genutzte Systeme verwenden teilweise eine sehr aufwendige dreidimensionale Lagenerkennung, so dass es zu sehr langen Antwortzeiten aufgrund der komplexen Berechnungsalgorithmen kommt. Bei hohen Artikelspektren müssen dabei alle Geometrien im Algorithmus einschließlich der möglichen Greifpunkte hinterlegt sein. Bei einem homogeneren Produktspektrum der zu kommissionierenden Artikel ist es bisweilen ausreichend, dass Produkte zur Aufnahme in eine feste und vordefinierte Lage gebracht werden und daher die räumlichen Koordinaten, die das Lastaufnahmemittel anfahren muss, stets die gleichen sind. Zusammenfassend lässt sich feststellen, dass die vollautomatisierte Kommissionierung von Artikeln noch nicht befriedigend gelöst ist.

Ausgehend von den Problemen und Nachteilen des Standes der Technik hat es sich die Erfindung zur Aufgabe gemacht, ein Kommissioniersystem zu schaffen, das auch ein inhomogenes Artikelspektrum handhaben kann und gleichzeitig mit einem nur niedrigen Personalaufwand einhergeht.

Diese Aufgabe wird durch das in Anspruch 1 angegebene Verfahren und vorrichtungsmäßig durch das in Anspruch 9 angegeben System gelöst.

Die erfindungsgemäße Lösung der Aufgabe sieht ein selbsttätiges Verfahren des Regalbediengeräts zu dem zu ergreifenden Artikel, ein Zuordnen des automatischen Greifsystems des Regalbediengeräts zu einem Arbeitsplatz eines Kommissionierers, ein Anzeigen des zu ergreifenden Artikels auf einer Anzeigeeinheit des Arbeitsplatzes mittels mindestens eines von einer Kamera erfassten Bildes, eine manuelle Vorgabe eines Greifpunktes des zu ergreifenden Artikels mittels optischer Auswertung des Bildes durch den Kommissionierer an das automatische Greifsystems und ein selbsttätiges Durchführen des Greifvorgangs des Artikels durch das automatische Greifsystem vor.

Unter dem Arbeitsplatz ist vorzugsweise ein dezentral angeordneter Arbeitsplatz zu verstehen, insbesondere kann der Kommissionierer von dem Arbeitsplatz aus mittels eines Datennetzes, beispielsweise eines öffentlichen Datennetzes mit dem automatischen Greifsystem in Verbindung treten. Das Datennetz kann beispielsweise ein Intranet oder das Internet sein, so dass der Kommissionierer ggf. auch von seinem heimischen Wohnort aus die Fernbedienung vornimmt; es muss lediglich eine Netzwerkverbindung zum Roboter möglich sein, z.B. über Webbrowser etc. Es handelt sich also um einen Arbeitsplatz außerhalb des Regalbediengeräts ohne Sichtkontakt zu dem zu ergreifenden Artikel, insbesondere außerhalb des Lagers.

Ein entscheidender Vorteil der Erfindung ist, dass auf aufwendige und kostenintensive sowie langsame Systeme zur Produktlagenerkennung mit umfassender Sensorik verzichtet werden kann und stattdessen besonders gezielt die Fertigkeiten eines Kommissionierers einsetzt werden. Erfindungsgemäß wird lediglich der Vorgang, welcher der Automatisierung am schwierigsten zugänglich ist, manuell gesteuert.

Die eigentliche Bestimmung des Greifpunktes erfolgt manuell aufgrund der optischen Bestimmung durch den Kommissionierer anhand des angezeigten Bildes. Der eigentliche Greifvorgang selbst anschließend läuft selbsttätig bzw. automatisch ab. Somit kann der Kommissionierer sich bereits der nächsten Greifpunktbestimmung zu wenden. Dies erlaubt zudem eine Entkopplung von der Aufnahme des Bildes und der Greifpunktbestimmung.

Somit können durch einen einzigen Kommissionierer mehrere automatische Greifsysteme bzw. Regalbediengeräte abwechselnd bedient werden. Dies spart Personal. Zudem kann der Kommissionierer seiner Tätigkeit in einer Büroumgebung nach gehen. Dies hat z.B. bei gekühlten Lagerbereichen oder hohem Lärmpegel enorme Vorteile.

Hierzu ist zweckmäßig an dem Arbeitsplatz eine Bedieneinheit vorgesehen, mittels derer der Greifpunkt vorgebbar ist. Diese Bedieneinheit kann beispielsweise eine Computermaus oder einen oder mehrere Joysticks etc. umfassen, wobei auch haptische Rückmeldungsgeber an den Bedienelementen zweckmäßig sein können. Beispielsweise kann ein virtuelles Berühren des Artikels mittels des Greifsystems dem Kommissionierer bei der Bedienung als erhöhter Verstellwiderstand an der Bedieneinheit angezeigt werden. Auch eine optische Rückmeldung des Greifpunkts (Koordinatenkreuz, Cursor etc) ist möglich.

Denkbar ist jedoch auch, dass die Anzeigeeinheit zur Ausbildung der Bedieneinheit als Touchscreen ausgebildet ist, so dass der Bediener mit dem Finger etc. auf den vorzugebenden ausgewählten Greifpunkt zeigt.

Eine besonders gute Übersicht ergibt sich für den Kommissionierer, wenn die Kamera an dem Roboter bzw. an dem automatischen Greifsystem angebracht ist. Gleichzeitig muss hierbei nur ein visuelles Erfassungssystem pro Greifsystem vorgesehen sein. Die Anzeigeeinheit kann auch stereoskopisch beispielsweise auch als Near-to-Eye-Display ausgebildet sein. Zweckmäßig ist auch die Ausstattung des Greifsystems mit einer Lichtquelle, so dass lediglich der Lagerort, an dem ein Verlagerungsvorgang stattfinden soll, beleuchtet ist und die Energie für eine Beleuchtung des gesamten Lagers eingespart werden kann. In gleicher Weise kann ggf. die Energie zur Klimatisierung des Lagers eingespart werden.

Um den personellen Aufwand zu reduzieren, ist es zweckmäßig, eine zentrale Steuerung vorzusehen, die derart ausgebildet ist, dass das automatische Greifsystem in die Nähe eines Lagerortes, an dem ein Verlagerungsvorgang stattfinden soll, automatisch verfährt und bei Erreichen des Lagerortes einen Hinweis auf der Anzeigeeinheit darstellt, welcher anzeigt, dass ein Ergreifungsvorgang fernbedient vorzugeben ist.
Der Hinweis muss hierbei nicht zwingend auf der Anzeigeeinheit erscheinen sondern kann von beliebiger Natur sein, beispielsweise akustisch.

Damit der Ergreifungsvorgang, der der manuellen Mitwirkung des Kommissionierers bedarf, und ggf. sich anschließender automatischer Verlagerungsvorgang besonders schnell von statten gehen kann/können, ist es sinnvoll, wenn der Lagerort und der Bereitstellungsort sich in unmittelbarer Nähe befinden. Eine besonders vorteilhafte Lösung hierzu ist dadurch gegeben, dass das automatische Greifsystem bzw. Regalbediengerät einen (oder mehrere) Behälter mitführt, in welchen der zu verlagernde Artikel eingelegt wird. Dieser Behälter kann anschließend auf einen Förderer abgelegt werden. Ggf. kann auch direkt an dem Lagerort ein Förderer entlang führen, der als Bereitstellungsort das Ziel der Verlagerung ist.

Es versteht sich in diesem Zusammenhang, dass der Lagerort nicht nur das eigentliche Lagerfach in einem Regal usw. sein kann. Es ist nämlich auch möglich, dass die Artikel in Behältern gelagert werden, die vom Roboter als solches entnommen werden. Der eigentliche Greifvorgang findet dann auf dem Roboter selbst statt, so dass Lagerort und der Bereitstellungsort noch näher zu einander angeordnet sind. Der Roboter entnimmt dann selbsttätig den Lagerbehälter mit dem/den Artikel/n und lagert diesen auf sich selbst um bzw. zwischen. Anschließend gibt der manuelle Bediener den Greifpunkt vor und der automatische Greifvorgang läuft ab. Danach stellt der Roboter den Lagerbehälter wieder selber, also automatisch in das Lagerfach zurück.

Ein besonders inhomogenes Artikelspektrum ist mittels des erfindungsgemäßen Kommissioniersystems handhabbar, wenn das automatische Greifsystem eine Greifeinheit umfasst, beispielsweise einen Backengreifer.

Der Umsatz des Kommissioniersystems lässt sich unter Einsatz eines Minimums an Kommissionierern bzw. Arbeitsplätzen maximieren, wenn die zentrale Steuereinheit ein automatisches Greifsystem beim Erreichen eines Lagerortes, an dem ein Ergreifungsvorgang ansteht, jeweils einem Arbeitsplatz zuordnet. Auf diese Weise wird der zeitliche Arbeitsplatzaufwand pro Greifsystem verringert, so dass ein Arbeitsplatz ggf. eine Vielzahl an Greifsystemen bzw. Regalbediengeräten jeweils nacheinander zu steuern vermag. Hierbei kann ggf. eine virtuelle Warteschlange vorgesehen sein, in der sich die einzelnen in dem Lager tätigen Regalbediengeräte zu sequenziellen Abarbeitungen der Verlagerungsvorgänge an dem Arbeitsplatz einreihen.

Organisatorisch kann der Kommissioniervorgang nach der Erfindung in folgende Verfahrensschritte gegliedert sein. In einem ersten Schritt verfährt das Regalbediengerät gesteuert von der zentralen Steuerung zu dem Lagerort, wo der zu verlagernde Artikel sich befindet. Anschließend ordnet die zentrale Steuerung in einem zweiten Schritt dem Regalbediengerät einen Arbeitsplatz zu. Entsprechend der Zuordnung veranlasst die zentrale Steuerung in einem dritten Schritt auch der Anzeigeeinheit des Arbeitsplatzes einen Hinweis auf den anstehenden Verlagerungsvorgang. Daraufhin gibt in einem vierten Schritt der Kommissionierer an dem Arbeitsplatz der zentralen Steuerung mittels eines Bedienelementes eine Rückmeldung, dass er bzw. der Arbeitsplatz die Steuerung des Verlagerungsvorganges übernimmt. Schließlich gibt der Kommissionierer an dem Arbeitsplatz fernbedient den Greifpunkt in einem fünften Schritt unterstützt von der Anzeigeeinheit, die ein mittels der Kamera erfasstes Bild von dem Zusammenwirken des Greifsystems des Regalbediengeräts mit dem zu verlagernden Artikel anzeigt, vor. Anschließend kann in einem sechsten Schritt der Kommissionierer von seinem Arbeitsplatz aus eine Rückmeldung an die zentrale Steuerung geben, dass die Vorgabe des Greifpunkts abgeschlossen ist. Daraufhin kann die zentrale Steuerung veranlassen, dass das Greifsystem das Ergreifen und ggf. anschließende Verlagern des Artikels selbsttätig ausführt und anschließend entsprechend dem ersten Schritt einen neuen Lagerort anfährt. Hierbei arbeiten vorzugsweise mehrere Regalbediengeräte gleichzeitig koordiniert von der zentralen Steuerung.

Die Erfindung ist anhand von Ausführungsbeispielen unter Bezugnahme auf die Zeichnungen ohne Einschränkung auf diese Beispiele näher erläutert. Es zeigen:
- Figur 1: eine schematische Darstellung eines erfindungsgemäßen Kommissioniersystems, das nach dem erfindungsgemäßen Verfahren arbeitet und
- Figur 2: eine schematische Darstellung einer alternativen Ausführungsform eines erfindungsgemäßen Kommissioniersystems.

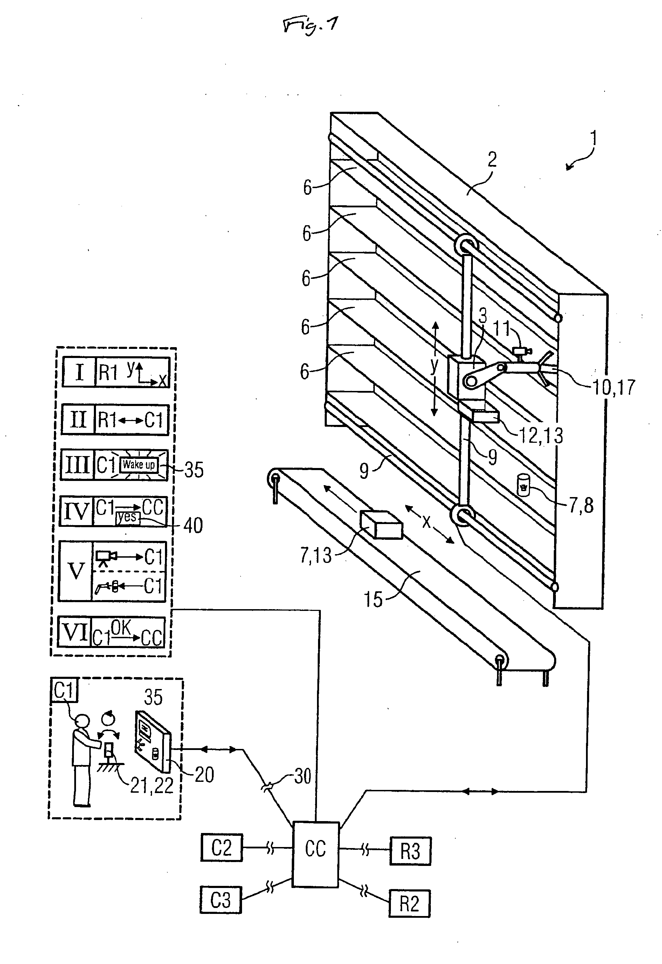

Wesentliche Bestandteile eines erfindungsgemäßen Kommissioniersystems 1 sind das Regal 2 eines Lagers, ein Roboter 3, ein Arbeitsplatz 4 und eine zentrale Steuereinheit CC. Das Regal 2 weist zeilenartig angeordnete Fächer 6 auf, in denen Artikel 7 an Lagerorten 8 angeordnet sind (vgl. Figur 1).

Jeder Lagerort 8 ist mittels einer Zeilenkoordinate und einer Spaltenkoordinate eindeutig anzugeben. Vor dem Regal 2 ist der Roboter 3 angeordnet, der in horizontaler (x) Richtung und in vertikaler (y) Richtung an einem Gestänge 9 verfahrbar ausgebildet ist.

Der Roboter 3 weist ein als Greifer ausgebildetes Lastaufnahmemittel 10 auf, mittels dessen er die Artikel 7 aufnehmen kann. An dem Roboter 3 ist eine Kamera 11 vorgesehen, die die Gegebenheiten an dem Lagerort 8 erfasst. Mittels des Lastaufnahmemittels 10 bewegt der Roboter 3 Artikel 7 von dem Lagerort 8 an einen Bereitstellungsort 12, der hier als Behälter 13 beispielhaft ausgebildet ist. Die Bewegung von dem Lagerort 8 an den Bereitstellungsort 12 oder umgekehrt ist als Verlagerungsvorgang bezeichnet. Der Behälter 13 wird von dem Roboter 3 nach abgeschlossenem Verlagerungsvorgang auf einen Förderer 15 gestellt und zur weiteren Verwendung abtransportiert. Das Lastaufnahmemittel 10 des Roboters 3 ist als Greifeinheit 17 ausgebildet.

Der Roboter 3 wird hinsichtlich des Anfahrens des Lagerortes 8 von der zentralen Steuereinheit CC gesteuert. An einem Lagerort 8 angekommen, wo ein Ergreifungsvorgang ansteht, übergibt die zentrale Steuereinheit CC die Steuerung an einen Arbeitsplatz 4, wo ein Kommissionierer C1 tätig ist.

Die zentrale Steuereinheit CC verwaltet mehrere Arbeitsplätze 4 bzw. Kommissionierer C1 bis C3. Stets wenn ein Ergreifungsvorgang ansteht, ordnet die zentrale Steuereinheit CC dem entsprechenden Roboter 3 einen Arbeitsplatz 4 bzw. Kommissionierer C1 bis C3 zu.

An dem Arbeitsplatz 4 ist eine Anzeigeeinheit 20 vorgesehen, mittels derer dem Kommissionierer die Gegebenheiten an dem Lagerort 8, insbesondere die Lage des Artikels 7 angezeigt werden.

Unter Betätigung eines Bedienelements 21 einer Bedieneinheit 22 gibt der Kommissionierer C1 den Greifpunkt der Greifeinheit 17 für den anstehenden Ergreifungsvorgang vor. Der Arbeitsplatz 4 steht mit der zentralen Steuereinheit CC mittels des Internets 30 in Verbindung.

Dazu geht die zentrale Steuereinheit CC den in der Figur 1 mit 1 bis VI bezeichneten Schritten wie folgt vor: Zunächst verfährt die zentrale Steuereinheit CC den Roboter 3 an dem Gestänge 9 horizontal (x) und vertikal (y) an dem Regal 2, bis ein Lagerort 8 erreicht ist, an dem ein Artikel 7 zum Ergreifen bzw. zur Entnahme ansteht (I).

Anschließend wird dem Roboter 3 (R1) dem Kommissionierer C1 zugeordnet (II). An dem Arbeitsplatz 4 gibt die zentrale Steuereinheit CC mittels der Anzeige dem Kommissionierer C1 einen Hinweis 35, dass eine Ergreifung ansteht (III).

Der Kommissionierer C1 bestätigt (40) die Übernahme dieses Auftrages (IV). Daraufhin gibt der Kommissionierer C1 den Greifpunkt für die Greifeinheit 17 mittels Bedienelementen 21 an der Bedieneinheit 22 unter Beobachtung des Bildes an der Anzeigeinheit 20, die das von der Kamera 11 erfasste Bild des Lagerortes 8 bzw. des Artikels 7 darstellt (V), vor.

Nach Abschluss der Vorgabe bestätigt der Kommissionierer C1 das Ende (OK) an die zentrale Steuereinheit CC (V1).

Diese übernimmt nun die Steuereinheit des automatischen Greifvorgangs an sich, der ohne Einwirkung des Kommissionierers von statten geht.

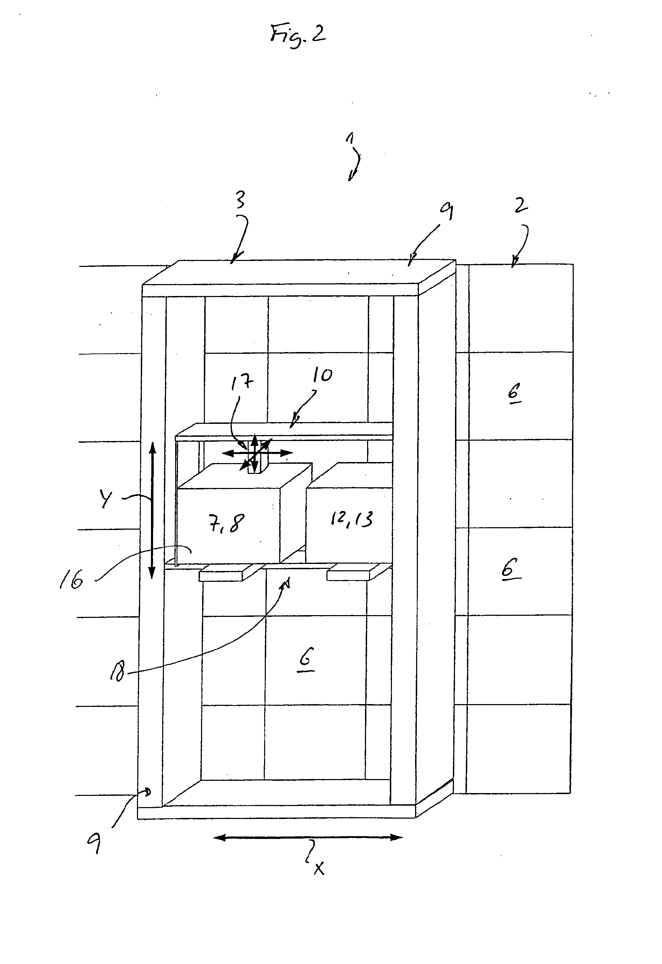

Das in der Figur 2 gezeigte alternative Kommissioniersystem entspricht weitestgehend dem zuvor beschriebenen. Daher werden sich entsprechende Teile mit gleichen Bezugszeichen versehen und es wird lediglich auf die Unterschiede eingegangen.

Wesentliche Bestandteile des erfindungsgemäßen alternativen Kommissioniersystems 1 sind wiederum das Regal 2, ein Roboter 3, ein Arbeitsplatz 4 (nicht dargestellt) und eine zentrale Steuereinheit CC (nicht dargestellt). Das Regal 2 weist zeilen- und spaltenartig angeordnete Fächer 6 auf, in denen Artikel 7 an Lagerorten 8 angeordnet sind (vgl. Figur 2). In den Fächern 6 befinden sich Lagerbehälter 16, in denen die Artikel 7 gelagert werden. Der Lagerbehälter 16 entspricht also dem Lagerort 8.

Jeder Lagerort 8 ist mittels ebenfalls einer Zeilenkoordinate und einer Spaltenkoordinate eindeutig aufzufinden. Vor dem Regal 2 ist der Roboter 3 angeordnet, der in horizontaler (x) Richtung und in vertikaler (y) Richtung mit einem Gerüst 9 verfahrbar ausgebildet ist. Der Roboter 3 weist ein Lastaufnahmemittel 10 auf, das im Gerüst 9 verfahrbar ist und das eine Greifeinheit 17 umfasst, mittels dessen er die Artikel 7 aufnehmen kann.

Wesentlicher Unterschied zum vorhergehenden Beispiel ist im diesem Zusammenhang, dass das Lastaufnahmemittel 10 nicht nur einen Bereitstellungsbehälter 13 mit sich führt, um die Artikel 7 aufzunehmen, sondern dass das Lastaufnahmemittel 10 zusätzlich einen Lagerbehälter 16 aufnehmen kann, in dem die Artikel 7 sich befinden. Das Lastaufnahmemittel 10 weist also zwei Behälterlagerplätze 18 auf. Auf dem einen Platz wird der Bereitstellungsbehälter 13 und auf dem anderen Platz der jeweilige Lagerbehälter 16 angeordnet.

Der Roboter 3 fährt also das entsprechende Lagerfach 6 des jeweiligen Artikels 7 an, entnimmt dort den Lagerbehälter 16, in dem sich ggf. mehrere Artikel befinden und lagert diesen in einer definierten Position auf dem Lastaufnahmemittel 10 zwischen. An dem Roboter 3 erfasst die Kamera 11 (nicht dargestellt) die Gegebenheiten an dem Lagerort 8, sprich Lagerbehälter 16. Mittels der Greifeinheit 17 bewegt der Roboter 3 dann den Artikel 7 von dem Lagerbehälter 16 an den Behälter 13, nachdem der Bediener den Greifpunkt analog zur obigen Vorgehensweise vorgegeben hat. Der Verlagerungsvorgang findet also quasi auf dem Roboter 3 bzw. dem Lastaufnahmemittel 10 selbst statt.

Der Lagerbehälter 16 wird von dem Roboter 3 bzw. Lastaufnahmemittel 10 nach abgeschlossenem Verlagerungsvorgang zurück in das Lagerfach 6 gestellt.

### Bezugszeichenliste

- 1: Kommissioniersystem
- 2: Regal
- 3: Roboter
- 4: Arbeitsplatz
- 6: Fächer
- 7: Artikel
- 8: Lagerort
- 9: Gestänge
- 10: Lastaufnahmemittel
- 11: Kamera
- 12: Bereitstellungsort
- 13: Behälter
- 15: Förderer
- 16: Lagerbehälter
- 17: Greifeinheit
- 18: Behälterlagerplatz
- 20: Anzeigeeinheit
- 21: Bedienelement
- 22: Bedieneinheit
- 30: Internet
- 35: Hinweis
- 40: Bestätigung
- C1-C3: Kommissionierer
- CC: Steuereinheit
- x: horizontal
- y: vertikal

## Patentansprüche

1. Verfahren zum Betrieb eines Kommissioniersystems (1) mit einem Lager, bei dem Artikel (7) von einem automatischen Greifsystem eines Regalbediengeräts ergriffen werden, **gekennzeichnet durch** die nachfolgenden Schritte
- selbsttätiges Verfahren des Regalbediengeräts zu dem zu ergreifenden Artikel (7),
- Zuordnen des automatischen Greifsystems (3) des Regalbediengeräts zu einem Arbeitsplatz (4) eines Kommissionierers (C1, C2, C3),
- Anzeigen des zu ergreifenden Artikels (7) auf einer Anzeigeeinheit (20) des Arbeitsplatzes (4) mittels mindestens eines von einer Kamera (11) erfassten Bildes,
- manuelle Vorgabe eines Greifpunktes des zu ergreifenden Artikels (7) mittels optischer Auswertung des Bildes **durch** den Kommissionierer (C1, C2, C3) an das automatische Greifsystems (3),
- selbsttätiges Durchführen des Greifvorgangs des Artikels (7) **durch** das automatische Greifsystem (3).

2. Verfahren nach Anspruch 1, **dadurch gekennzeichnet, dass** der Kommissionierer (C1, C2, C3) über eine Bedieneinheit (22) den Greifpunkt vorgibt.

3. Verfahren nach Anspruch 2, **dadurch gekennzeichnet, dass** die Bedieneinheit (22) eine optische Rückmeldung des Greifpunkts darstellt.

4. Verfahren nach einem der vorhergehenden Ansprüche, **dadurch gekennzeichnet, dass** die Bedieneinheit (22) eine haptische Rückmeldung abgibt.

5. Verfahren nach einem der vorhergehenden Ansprüche, **dadurch gekennzeichnet, dass** die Kamera (11) an dem automatischen Greifsystem (3) angebracht ist.

6. Verfahren nach einem der vorhergehenden Ansprüche, **dadurch gekennzeichnet, dass** eine zentrale Steuereinheit (CC) die Kommissioniervorgänge steuert und derart ausgebildet ist, dass das automatische Greifsystem (3), das Regalbediengerät (10) oder die Greifeinheit (17) in die Nähe eines Lagerortes (8), an dem ein Greifvorgang stattfinden soll, automatisch verfährt und bei Erreichen des Lagerortes (8) einen Hinweis auf der Anzeigeeinheit (20) darstellt, welcher anzeigt, dass ein Greifpunkt fernbedient vorzugeben ist.

7. Verfahren nach einem der vorhergehenden Ansprüche, **dadurch gekennzeichnet, dass** der Arbeitsplatz (4) außerhalb des Regalbediengeräts ohne Sichtkontakt zu dem zu ergreifenden Artikel, insbesondere außerhalb des Lagers angeordnet ist.

8. Verfahren nach einem der vorhergehenden Ansprüche, **dadurch gekennzeichnet, dass** der Arbeitsplatz (4) mittels eines Datennetzwerks mit dem Regalbediengerät oder dem automatischen Greifsystem (3) in Verbindung steht.

9. Kommissioniersystem (1) mit einem Lager, in welchem Artikel (7) an Lagerorten (8) gelagert sind, und mit einem Roboter (3), welcher mittels mindestens eines Lastaufnahmemittels (10) Artikel (7) automatisch ergreift und in einem Verlagerungsvorgang von dem Lagerort (8) an einen Bereitstellungsort (12) oder in umgekehrte Richtung bewegt, wobei mindestens eine Kamera (11) vorgesehen ist, welche den zu ergreifenden Artikel (7) erfasst, und eine Anzeigeeinheit (20) an einem Arbeitsplatz (4) vorgesehen ist, welche die Anordnung bildlich wiedergibt, **dadurch gekennzeichnet, dass** der Arbeitsplatz (4) derart ausgebildet ist, dass ein Kommissionierer (C1, C2, C3) von dem Arbeitsplatz (4) aus manuell durch optische Auswertung des auf der Anzeigeeinheit (20) dargestellten Bildes dem Roboter (3) den Greifpunkt des jeweiligen Artikels (7) vorgibt.

10. Kommissioniersystem (1) nach Anspruch 9, **dadurch gekennzeichnet, dass** der Arbeitsplatz (4) eine Bedieneinheit (22) zur Vorgabe des Greifpunkts aufweist.

11. Kommissioniersystem (1) nach Anspruch 10, **dadurch gekennzeichnet, dass** die Bedieneinheit (22) einen Joystick-artigen Aufbau aufweist.

12. Kommissioniersystem (1) nach Anspruch 10, **dadurch gekennzeichnet, dass** die Anzeigeeinheit (20) zur Ausbildung der Bedieneinheit (22) als Touchscreen ausgebildet ist.

13. Kommissioniersystem (1) nach Anspruch 10, **dadurch gekennzeichnet, dass** die Bedieneinheit (22) als Computermaus ausgebildet ist.

14. Kommissioniersystem (1) nach einem der vorhergehenden Ansprüche 9 bis 13, **dadurch gekennzeichnet, dass** eine zentrale Steuereinheit (CC) zur Steuerung der Kommissioniervorgänge vorgesehen ist, die derart ausgebildet ist, dass der Roboter (3), das Lastaufnahmemittel (10) oder die Greifeinheit (17) in die Nähe eines Lagerortes (8), an dem ein Verlagerungsvorgang stattfinden soll, automatisch verfährt und bei Erreichen des Lagerortes (8) einen Hinweis auf der Anzeigeeinheit (20) darstellt, welcher anzeigt, dass ein Greifpunkt fernbedient vorzugeben ist.

15. Kommissioniersystem (1) nach einem der vorhergehenden Ansprüche 9 bis 14, **dadurch gekennzeichnet, dass** der Roboter (3) zwei oder mehr Behälterlagerplätze (18) aufweist.

## Claims

1. Method of operating an order-picking system (1) having a store, in which articles (7) are grasped by an automatic grasping system belong to a rack-serving unit, **characterized by** the following steps
- automatic displacement of the rack-serving unit relative to the article (7) to be grasped,
- assignment of the automatic grasping system (3) of the rack-serving unit to a work station (4) for an order picker (C1, C2, C3),
- display of the article (7) to be grasped on a display unit (20) at the work station (4) by means of a slide of which an image is formed by means of at least one camera (11),
- manual presetting for the automatic grasping system (3) of a point for grasping the article (7) which is to be grasped, by means of a visual analysis of the image by the order picker (C1, C2, C3),
- automatic execution by the automatic grasping system (3) of the operation of grasping the article (7).

2. Method according to claim 1, **characterised in that** the order picker (C1, C2, C3) presets the point for grasping by means of a control unit (22).

3. Method according to claim 2, **characterised in that** the control unit (22) shows a visual check-back indication of the point for grasping.

4. Method according to one of the foregoing claims, **characterised in that** the control unit (22) gives a haptic check-back indication.

5. Method according to one of the foregoing claims, **characterised in that** the camera (11) is mounted on the automatic grasping system (3).

6. Method according to one of the foregoing claims, **characterised in that** a central control system (CC) controls the order- picking operations and is so designed that the automatic grasping system (3), the rack-serving unit (10) or the grasping unit (17) travels automatically into the vicinity of a storage location (8) at which a grasping operation is to take place and, on reaching the storage location (8), displays on the display unit (20) a direction which indicates that a point for grasping needs to be preset by remote control.

7. Method according to one of the foregoing claims, **characterised in that** the work station (4) is arranged away from the rack-serving unit at a point where there is no visual contact with the article to be grasped, and in particular away from the store.

8. Method according to one of the foregoing claims, **characterised in that** the work station (4) is connected to the rack-serving unit or the automatic grasping system (3) by means of a data network.

9. Order-picking system (1) having a store in which articles (7) are stored at storage locations (8), and having a robot (3) which automatically grasps articles (7) by means of an least one load-receiving means (10) and, in a displacement operation, moves them from the storage location (8) to a point (12) at which they are made available or in the opposite direction, at least one camera (11) being provided which forms an image of the article (7) to be grasped, and there is provided, at a work station (4), a display unit (20) which shows a pictorial representation of the layout, **characterised in that** the work station (4) is so designed that, from the work station (4), an order picker (C1, C2, C3) manually presets for the robot (3) the point for the grasping of the given article (7) by a visual analysis of the slide which is displayed on the display unit (20).

10. Order-picking system (1) according to claim 9, **characterised in that** the work station (4) has a control unit (22) for presetting the point for grasping.

11. Order-picking system (1) according to claim 10**, characterised in that** the control unit (22) is of a joystick-like structure.

12. Order-picking system (1) according to claim 10, **characterised in that** the display unit (20) is designed to allow the control unit (22) to take the form of a touch screen.

13. Order-picking system (1) according to claim 10, **characterised in that** the control unit (22) takes the form of a computer mouse.

14. Order-picking system (1) according to one of foregoing claims 9 to 13, **characterised in that** a central control system (CC) is provided to control the order-picking operations, the central control system (CC) being so designed that the robot (3), the load-receiving means (10) or the grasping unit (17) travels automatically into the vicinity of a storage location (8) at which a displacement operation is to take place and, on the storage location (8) being reached, displays on the display unit (20) a direction which indicates that a point for grasping needs to be preset by remote control.

15. Order-picking system (1) according to one of foregoing claims 9 to 14, **characterised in that** the robot (3) has two or more locations (18) for the storage of containers.

## Revendications

1. Procédé d'exploitation d'un système de préparation de commandes (1) comprenant un magasin dans lequel des articles (7) sont pris par un système de préhension automatique d'un gerbeur, **caractérisé par** les étapes suivantes :
- le gerbeur se déplace automatiquement vers l'article (7) à prendre,
- le système de préhension automatique (3) du gerbeur est associé à un poste de travail (4) d'un préparateur de commandes (C1, C2, C3),
- l'article (7) à prendre est présenté sur une unité de présentation (20) du poste de travail (4) au moyen d'au moins une image prise par une caméra (11),
- le préparateur de commandes (C1, C2, C3) prescrit manuellement au système de préhension automatique (3) un point de préhension de l'article (7) à prendre en exploitant visuellement l'image,
- le système de préhension automatique (3) exécute automatiquement le processus de préhension de l'article (7).

2. Procédé selon la revendication 1, **caractérisé en ce que** le préparateur de commandes (C1, C2, C3) prescrit le point de préhension par le biais d'une unité de commande (22).

3. Procédé selon la revendication 2, **caractérisé en ce que** l'unité de commande (22) affiche un accusé réception visuel du point de préhension.

4. Procédé selon l'une des revendications précédentes, **caractérisé en ce que** l'unité de commande (22) délivre un accusé de réception haptique.

5. Procédé selon l'une des revendications précédentes, **caractérisé en ce que** la caméra (11) est montée sur le système de préhension automatique (3).

6. Procédé selon l'une des revendications précédentes, **caractérisé en ce qu'**une unité de commande centrale (CC) commande les processus de préparation de commandes et est conformée de telle sorte que le système de préhension automatique (3), le gerbeur (10) ou l'unité de préhension (17) se déplace automatiquement jusqu'à proximité d'un emplacement de stockage (8) où un processus de préhension doit être exécuté et, lorsque l'emplacement de stockage (8) est atteint, il affiche sur l'unité de présentation (20) une information indiquant qu'un point de préhension a été prescrit à distance.

7. Procédé selon l'une des revendications précédentes, **caractérisé en ce que** le poste de travail (4) est disposé à l'extérieur du gerbeur sans contact visuel avec l'article à prendre, notamment à l'extérieur du magasin.

8. Procédé selon l'une des revendications précédentes, **caractérisé en ce que** le poste de travail (4) est en liaison avec le gerbeur ou le système de préhension automatique (3) au moyen d'un réseau de données.

9. Système de préparation de commandes (1) comprenant un magasin, dans lequel des articles (7) sont stockés à des emplacements de stockage (8), et un robot (3) qui prend automatiquement des articles (7) à l'aide d'au moins un moyen de réception de charges (10) et se déplace, suivant un processus de déplacement, de l'emplacement de stockage (8) à un emplacement de préparation (12) ou inversement, au moins une caméra (11) étant prévue qui détecte l'article (7) à prendre, et une unité de présentation (20) étant prévue à un poste de travail (4), laquelle reproduit par images la disposition, **caractérisé en ce que** le poste de travail (4) est conformé de telle sorte qu'un préparateur de commandes (C1, C2, C3) prescrit manuellement au robot, depuis le poste de travail (4), le point de préhension de l'article respectif (7) en effectuant une évaluation visuelle de l'image représentée sur l'unité de présentation (20).

10. Système de préparation de commandes (1) selon la revendication 9, **caractérisé en ce que** le poste de travail (4) présente une unité de commande (22) destinée à prescrire le point de préhension.

11. Système de préparation de commandes (1) selon la revendication 10, **caractérisé en ce que** l'unité de commande (22) présente un élément structurel de type manette de commande.

12. Système de préparation de commandes (1) selon la revendication 10, **caractérisé en ce que** l'unité de présentation (20) destinée à former l'unité de commande (22) est conformée en écran interactif.

13. Système de préparation de commandes (1) selon la revendication 10, **caractérisé en ce que** l'unité de commande (22) est conformée en souris d'ordinateur.

14. Système de préparation de commandes (1) selon l'une des revendications précédentes 9 à 13, **caractérisé en ce que**, pour commander les processus de préparation de commandes, il est prévu une unité de commande centrale (CC) qui est conformée de telle sorte que le robot (3), le moyen de réception de charges (10) ou l'unité de préhension (17) se déplace automatiquement jusqu'à proximité d'un emplacement de stockage (8) où un processus de déplacement doit être exécuté et, lorsque l'emplacement de stockage (8) est atteint, il affiche sur l'unité de présentation (20) une information indiquant qu'un point de préhension doit être prescrit à distance.

15. Système de préparation de commandes (1) selon l'une des revendications précédentes 9 à 14, **caractérisé en ce que** le robot (3) présente deux emplacements de stockage de récipient (18) ou plus.
